(19) Europäisches Patentamt
European Patent Office
Office européen des brevets

(11) Veröffentlichungsnummer : **0 142 693**
**B1**

(12) # EUROPÄISCHE PATENTSCHRIFT

(45) Veröffentlichungstag der Patentschrift : **27.05.87**

(21) Anmeldenummer : **84112106.4**

(22) Anmeldetag : **10.10.84**

(51) Int. Cl.[4] : **C 08 L 69/00**, C 08 L 25/16 // (C08L69/00, 25:16, 51:04),(C08L25/16, 69:00, 51:04)

(54) **Selbstverlöschende thermoplastische Formmassen aus Polycarbonat und Pfropf-Polymerisaten.**

(30) Priorität : **22.10.83 DE 3338502**

(43) Veröffentlichungstag der Anmeldung : **29.05.85 Patentblatt 85/22**

(45) Bekanntmachung des Hinweises auf die Patenterteilung : **27.05.87 Patentblatt 87/22**

(84) Benannte Vertragsstaaten : **DE FR GB IT**

(56) Entgegenhaltungen :
**EP-A- 0 034 252**
**EP-A- 0 064 648**
**GB-A- 1 253 226**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lindner, Christian, Dr.**
**Riehler Strasse 200**
**D-5000 Köln 60 (DE)**
Erfinder : **Müller, Friedemann, Dr.**
**Am Steinacker 65**
**D-4040 Neuss 21 (DE)**
Erfinder : **Peters, Horst, Dr.**
**Winterberg 25**
**D-5090 Leverkusen 3 (DE)**
Erfinder : **Kress, Hans-Jürgen, Dr.**
**Scheiblerstrasse 111**
**D-4150 Krefeld (DE)**
Erfinder : **Buekers, Josef**
**Kneinstrasse 58a**
**D-4150 Krefeld (DE)**

**EP 0 142 693 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft selbstverlöschende thermoplastische Formmassen aus einem aromatischen Polycarbonat, einem thermoplastischen Copolymerisat, enthaltend kernalkyliertes Styrol, und einem Pfropfcopolymerisat.

Thermoplastische Formmassen aus Mischungen von Polycarbonaten auf Basis aromatischer Dihydroxiverbindungen und ABS-Polymerisaten sind bekannt. Zusätzlich zu ihren guten technologischen Eigenschaften wird für Anwendungen in der Elektrotechnik, der Elektronik und der Verkehrstechnik oft verlangt, daß sie auch nach einer begrenzten Fremdzündung von selbst verlöschen. Das Brandverhalten solcher Massen kann nach UL-94 beurteilt werden.

Halogenverbindungen als Flammschutzmittel vermindern die Brennbarkeit der Formmassen aus Polycarbonat und ABS. Gemäß DE-PS 2 259 565, DE-OS 2 329 548 und DE-OS 2 329 546 kann man auch halogenhaltige Polycarbonate mit ABS zur Verminderung der Brennbarkeit mischen. Eine Einstufung mindestens nach UL-94 V-2 wird jedoch erst durch Zusatz von Antimontrioxid und Halogenverbindung erreicht oder durch sehr große Mengen Halogenverbindung. Um die Korrosionsschädigung durch Halogen im Brandfalle möglichst gering zu halten, versucht man, möglichst kleine Halogenmengen einzusetzen. Große Halogenmengen beeinträchtigen außerdem die Produkteigenschaften, z. B. die mechanische Festigkeit und die Wärmeformbeständigkeit und bewirken Oberflächenstörungen durch Schlierenbildung.

Antimontrioxid in Kombination mit Halogenverbindungen schränkt die Verarbeitungsbedingungen des Materials ein ; man muß thermische Schädigung des Materials durch Antimontrioxid zu vermeiden versuchen.

Bei höheren Verarbeitungstemperaturen (z. B. oberhalb 290 °C), die bei der Herstellung komplizierter, großflächiger oder großvolumiger Teile erforderlich sind, kann Antimontrioxid Oberflächenstörungen, z. B. Bläschen und Schlieren sowie Depolymerisation (Verminderung der mechanischen Festigkeit, z. B. der Kerbschlagzähigkeit), hervorrufen.

Es wurde gefunden, daß thermoplastische Formmassen aus aromatischem Polycarbonat, einem Pfropfcopolymerisat und einem thermoplastischen Copolymerisat gemäß UL-94 selbstverlöschend sind, wenn das aromatische Polycarbonat Halogen enthält und das thermoplastische Copolymerisat kernalkyliertes Styrol einpolymerisiert enthält.

Diese Formmassen können zusätzlich organische Halogenverbindungen als Flammschutzmittel und bestimmte anorganische Flammschutzadditive enthalten. Antimontrioxid ist nicht erforderlich. Deshalb haben diese Formmassen die oben beschriebenen Nachteile nicht.

Gegenstand der Erfindung sind selbstverlöschende, thermoplastische Formmassen aus

a) 20-80 Gew.-% (bezogen auf a + b + c) eines Copolycarbonats aus einem zweiwertigen Phenol und einem zweiwertigen halogenierten Phenol, wobei das Copolycarbonat 3-20 Gew.-% einkondensiertes Halogen enthält,

b) 10-70 Gew.-% (bezogen auf a + b + c) eines thermoplastischen Copolymerisats aus
1. 10-90 Gew.-% (bezogen auf Copolymerisat) eines kernalkylierten Styrols der Formel I

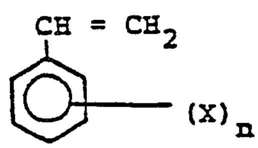

(I)

worin
X = Methyl, Ethyl, n-Propyl oder Isopropyl und
n = eine ganze Zahl von 1 bis 5
bedeuten,
2. 80-0 Gew.-% Styrol und/oder α-Methylstyrol und
3. 10-30 Gew.-% Acrylnitril,

c) 10-70 Gew.-% (bezogen auf a + b + c) eines Pfropfpolymerisats von Styrol, α-Methylstyrol, kernsubstituiertem Styrol der Formel I oder Mischungen daraus einerseits und Acrylnitril, Methylmethacrylat oder Mischungen davon andererseits auf teilchenförmige, wenigstens partiell vernetzte Kautschuke einer Glasübergangstemperatur $\leq 20$ °C, eines mittleren Teilchendurchmessers ($d_{50}$) von 0,1-5 μm und einem Gelgehalt (in Toluol) > 50 Gew.-%, im Gewichtsverhältnis von Kautschuk zu pfropfpolymerisierten Monomeren von 80 : 20 bis 5 : 95 sowie gegebenenfalls

d) 0-12 Gew.-Teile pro 100 Gew.-Teile a + b + c einer halogenhaltigen organischen Flammschutzverbindung und

e) 0-5 Gew.-Teile pro 100 Gew.-Teile a + b + c Zinndioxid, Calciumphosphit, Calciumhypophosphit, Zinkborat, Aluminiumoxid, Kryolith, Wismutoxid oder Bariumcarbonat.

Aromatische Polycarbonate sind Polycarbonate aus einem oder mehreren der folgenden Diphenole :
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
α,α'-Bis-(hydroxyphenyl)-diisopropylbenzole,
wobei die Phenylreste auch Alkylsubstituenten und Halogenatome tragen können.

Diese und weitere geeignete Diphenole sind z. B. in den US-Patentschriften 3 028 365, 2 999 835, 3 148 172, 3 275 601, 2 991 273, 3 271 367, 3 062 781 und 2 999 846, in den deutschen Offenlegungsschriften 1 570 703, 2 063 050, 2 063 052, 2 211 956, 2 211 957, der französischen Patentschrift 1 561 518 und der Monographie « H. Schnell, Chemistry and Physics of Polycarbonates, Interscience Publishers, New York, 1964 » beschrieben.

Bevorzugt sind Polycarbonate auf Basis Bis-(4-hydroxyphenyl)-propan-2,2 (Bisphenol A), Bis-(4-hydroxy-3,5-dichlorphenyl)-propan-2,2 (Tetrachlorbisphenol-A), Bis-(4-hydroxy-3,5-dibromphenyl)-propan-2,2 (Tetrabrombisphenol-A), Bis-(4-hydroxyphenyl)-cyclohexan-1,1 (Bisphenol-Z), Bis-(4-hydroxyphenyl)-methan (Bisphenol-F), Bis-(4-hydroxy-3,5-dimethyl)-propan-2,2 (Tetramethylbisphenol-A) sowie auf Basis von Dreikernbisphenolen wie α,α'-Bis-(4-hydroxyphenyl)-p-diisopropylbenzol.

Besonders bevorzugt sind Copolycarbonate, die neben Tetrabrombisphenol A eines der anderen bevorzugten Diphenole enthält.

Besonders bevorzugt sind weiterhin Polycarbonate neben Tetrabrombisphenol-A auf Basis von 2,2-Bis-(4-hydroxyphenyl)-propan oder 2,2-Bis-(3,5-dimethyl-4-hydroxyphenyl)-propan. Die aromatischen Polycarbonate können nach bekannten Verfahren hergestellt werden, z. B. einer Schmelzumesterung aus Bisphenol und Diphenylcarbonat und in Lösung aus Bisphenolen und Phosgen. Die Lösung kann homogen sein (« Pyridinverfahren ») oder heterogen (« Zweiphasen-Grenzflächenverfahren »). Erfindungsgemäß sind Polycarbonate, die in Lösung, insbesondere nach dem Zweiphasen-Grenzflächenverfahren, hergestellt worden sind, besonders geeignet.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, z. B. solchen mit drei oder mehr als drei phenolischen Hydroxygruppen verzweigt sein.

Die Molekulargewichtsregelung erfolgt durch Einsatz von Kettenabbrechern in den üblichen Mengen, z. B. Phenol, p-tert.-Butylphenol und 2,4,6-Tribromphenol.

Die aromatischen Polycarbonate sollen in der Regel mittlere Gewichtsmittel-Molekulargewichte $M_w$ von 10 000 bis über 200 000, vorzugsweise von 20 000 bis 80 000, haben (ermittelt durch Messungen der rel. Viskosität in $CH_2Cl_2$ bei 25 °C bei einer Konzentration von 0,5 Gew.-%).

Das thermoplastische Copolymerisat b) der erfindungsgemäßen Formmassen stellt ein Copolymerisat aus kernalkyliertem Styrol wie o-, m-, p-$C_1$-$C_3$-Alkylstyrol oder mehrfach kernsubstituierten $C_1$-$C_3$-Alkylstyrolen, insbesondere o-, m-, p-Methylstyrol, dar ; Comonomere für das Polymerisat b) sind Acrylnitril, Styrol und α-Methylstyrol. Die Polymerisate b) enthalten wenigstens 10 Gew.-% Monomere der Formel (I) in copolymerisierter Form

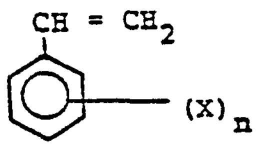

(I)

X = $CH_3$, $C_2H_5$, $C_3H_7$ und
n = 1-5

sowie 10 bis 30 Gew.-% eingebautes Acrylnitril. Bevorzugte Polymerisate b) sind Copolymere aux 90-70 Gew.-% Monomer (I), insbesondere p-Methylstyrol, und 10-30 Gew.-% Acrylnitril sowie Copolymere aus 10-50 Gew.-% Monomer (I) und 90-50 Gew.-% Styrol/Acrylnitril-Gemischen. Erfindungsgemäß geeignete Copolymerisate b) sind in organischen Lösungsmitteln voll- oder teillöslich ; sie können unvernetzt oder teilvernetzt sein. Unvernetzte Copolymerisate haben bevorzugt die Staudingerindices im Bereich von 0,3-1,5 dl/g (gemessen in DMF bei 25 °C), bevorzugt 0,3-0,8 und insbesondere 0,4-0,8.

Die Copolymerisate b) können nach bekannten Verfahren durch radikalische oder thermische Polymerisation hergestellt werden ; besonders geeignet ist die Emulsionspolymerisation, Perlpolymerisation oder Masse- bzw. Lösungspolymerisation, initiiert gegebenenfalls durch anorganische oder organische Peroxide, Hydroperoxide oder Azoverbindungen sowie gegebenenfals hergestellt in Gegenwart von Molekulargewichtsreglern. Die Polymerisation wird vorzugsweise bei 30-150 °C, insbesondere 40-80 °C, durchgeführt.

Der dritte Bestandteil der erfindungsgemäßen Formmassen sind Pfropfpolymerisate (c) auf Kautschukbasis. In diesen Produkten ist auf einen Kautschuk eine Monomermischung der Monomeren Styrol, α-Methylstyrol, oder kernsubstituiertes Alkylstyrol der Formel (I) einerseits und Acrylnitril oder Methylmethacrylat andererseits pfropfpolymerisiert. Geeignete Kautschuke sind insbesondere Polybutadien, Butadien-Styrol-Copolymerisate mit bis zu 30 Gew.-% eincopolymerisiertem Styrol, Copolymerisate von Butadien und bis zu 33 Gew.-% Acrylnitril oder Copolymerisate von Butadien mit bis zu 20 Gew.-% eines niederen Alkylesters von Acryl- oder Methacrylsäure ; weitere bevorzugte Kautschuke sind Alkylacrylatkautschuke oder Ethylen-Propylen-Dienmonomer-Kautschuke (EPDM). Prinzipiell sind alle elastifizierenden Komponenten als Kautschuke geeignet, sofern sie kautschukelastisches Verhalten aufweisen.

Das Gewichtsverhältnis von Kautschuk zu pfropfpolymerisierten Monomeren beträgt 80 : 20 bis 5 : 95. Die Kautschuke in den Pfropfpolymerisaten haben Teilchen mit einem mittleren Durchmesser ($d_{50}$) von 0,1-5 μm, bevorzugt 0,2-1 μm ; zusätzlich sind sie wenigstens partiell vernetzt.

Solche Pfropfpolymerisate sind bekannt. Sie können z. B. durch Polymerisation der Monomeren in Gegenwart radikalischer Katalysatoren in Anwesenheit eines Kautschuks (insbesondere in Form eines Kautschuklatex) hergestellt werden.

Besonders geeignete Pfropfpolymerisate c) sind Pfropfpolymerisate von Styrol/Acrylnitril-Gemisch auf Dienkautschuk, sogenannte ABS-Polymerisate, oder Pfropfpolymerisate von Monomer (I)/Acrylnitril-Gemischen, gegebenenfalls als weiteres Monomer Styrol enthaltend, auf Dienkautschuke ; diese besonders geeigneten Pfropfprodukte c) weisen vorzugsweise einen Kautschukgehalt ≥ 30 Gew.-%, insbesondere ≥ 50 Gew.-% auf.

Neben der Pfropfreaktion von Monomeren auf Kautschuke bilden sich auch freie Copolymerisate der zur Pfropfung eingesetzten Monomeren.

Diese freien Copolymerisate sind in ihrer Zusammensetzung identisch mit dem Pfropfanteil der Komponente c). So kann man z. B. als c) ein ABS-Polymer einsetzen, das aus einem Gemisch von Pfropfcopolymerisat und SAN-Copolymer besteht.

Als organische halogenhaltige Verbindungen d) sind Flammschutzmittel wir z. B. Hexachlorcyclopentadien, Hexabromdiphenyl, Octabromdiphenyl, Tribromphenoxymethan, Decabromdiphenyl, Decabromdiphenyloxid, Octabromdiphenyloxid, Bis-(2,4,6-tribromphenyl)-carbonat, Tetrabromphthalimid, Hexabrombuten, Trichlortetrabromtoluol, Pentabromphenyl-triphosphat, Hexabromcyclododecan sowie oligomere und/oder polymere, kernbromierte Polyphenylenoxide in Mengen 0-12 Gew.-% (bezogen auf a + b + c), vorzugsweise in Mengen von 3-8 Gew.-%, geeignet.

Als weitere Flammschutzmittel e) können gegebenenfalls synergistisch wirkendes Zinndioxid, Calciumphosphit, Calciumhypophosphit, Zinkborat, Aluminiumoxid, Kryolith, Wismutoxid oder Bariumcarbonat in Mengen von bis zu 5 Gew.-% (bezogen auf a + b + c) zugesetzt werden.

Das Brandverhalten der Proben wurde nach dem Prüfverfahren der Underwriters Laboratories Inc. nach UL-94 in vertikaler Probenanordnung untersucht.

Die Kerbschlagzähigkeit wurde nach DIN-Vorschrift 53453 ermittelt.

## Beispiele und Vergleichsversuche

Die in der Tabelle angegebenen Gewichtsteile an Polycarbonat Komponente A und an ABS Komponente B bzw. C und die anorganischen Zusatzstoffe D wurden in einem Doppelwellenextruder bei ca. 260 °C gemischt, homogenisiert und granuliert und zu Prüfkörpern verspritzt.

Für die Beispiele wurde ein Polycarbonat, im folgenden mit A bezeichnet, aus Bisphenol-A und 10 Gew.-% einkondensiertem Tetrabrombisphenol-A mit einer relativen Lösungsviskosität von 1,284 in Methylenchlorid bei 25 °C und einer Konzentration von 0,5 Gew.-% verwendet.

Für die erfindungsgemäßen Beispiele wurde folgendes ABS-Polymerisat, im folgenden mit B bezeichnet, bestehend aus

40 Gew.-Teilen eines Emulsionspfropfpolymerisates aus

36 Gew.-Teilen Styrol und 14 Gew.-Teilen Acrylnitril auf 50 Gew.-Teile eines grobteiligen hochvernetzten Polybutadien-Kautschuks mit einem Teilchendurchmesser $d_{50}$-Wert = 0,4 μm und

60 Gew.-Teilen eines Emulsionscopolymers aus 78 Gew.-Teilen p-Methylstyrol und 22 Gew.-Teilen Acrylnitril und einem L-Wert = 53, gemessen in DMF bei 25 °C, verwendet.

Für Vergleichszwecke wurde ein ABS-Polymerisat, im folgenden mit C bezeichnet, bestehend aus

40 Gew.-Teilen eines Emulsionspfropfpolymerisates aus

36 Gew.-Teilen Styrol und 14 Gew.-Teilen Acrylnitril auf 50 Gew.-Teile eines grobteiligen hochvernetzten Polybutadien-Kautschuks mit einem Teilchendurchmesser $d_{50}$-Wert = 0,4 µm

60 Gew.-Teilen eines Emulsionscopolymerharzes aus 72 % Styrol und 28 % Acrylnitril und einem L-Wert = 54, gemessen in DMF bei 25 °C, verwendet.

Die ABS-Komponenten B sowie C wurden jeweils über Vermischung von Harz und Pfropflatex nach Stabilisierung mit phenolischen Antioxidantien durch Koagulation der Emulsionsmischung isoliert und getrocknet.

(Siehe Tabelle Seite 6 f.)

Tabelle

| Beispiele Nr. (erfindungsgemäß) | Gew.-Tle. A | Gew.-Tle. B | Gew.-Tle. C | Gew.-Tle. Zinndioxid | Gew.-Tle. Antimonoxid | Brandklasse nach UL 94 V (Prüfkörperdicke) | Kerbschlagzähigkeit* kJ/m² |
|---|---|---|---|---|---|---|---|
| 1 | 70 | 30 | - | - | - | V 2 (3,2 mm) | 32 |
| 2 | 70 | 30 | - | 1 | - | V 2 (3,2 mm) | 31 |
| 3 | 70 | 30 | - | 1 | - | V 2 (1,6 mm) | 31 |
| Vergleichsbeispiele (nicht erfindungsgemäß) | | | | | | | |
| I | 70 | - | 30 | - | 1 | V 2 (3,2 mm) | 12 |
| II | 70 | - | 30 | - | - | nicht best. (3,2 mm) | 25 |
| III | 70 | - | 30 | 1 | - | nicht best. (1,6 mm) | 25 |

* Verarbeitungstemperatur 260 °C

**Patentanspruch**

Selbstverlöschende, thermoplastische Formmassen aus

a) 20-80 Gew.-% (bezogen auf a + b + c) eines Copolycarbonats aus einem zweiwertigen Phenol und einem zweiwertigen halogenierten Phenol, wobei das Copolycarbonat 3-20 Gew.-% einkondensiertes Halogen enthält,

b) 10-70 Gew.-% (bezogen auf a + b + c) eines thermoplastischen Copolymerisats aus
1. 10-90 Gew.-% (bezogen aus Copolymerisat) eines kernalkylierten Styrols der Formel I

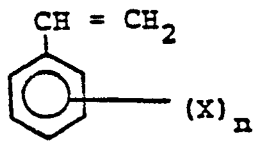

(I)

worin
X = Methyl, Ethyl, n-Propyl oder Isopropyl und
n = eine ganze Zahl von 1 bis 5
bedeutet,
2. 80-0 Gew.-% Styrol und/oder α-Methylstyrol und
3. 10-30 Gew.-% Acrylnitril

c) 10-70 Gew.-% (bezogen auf a + b + c) eines Pfropfpolymerisats von Styrol, α-Methylstyrol, kernsubstituiertem Styrol der Formel I oder Mischungen daraus einerseits und Acrylnitril, Methylmethacrylat oder Mischungen davon andererseits auf teilchenförmige, wenigstens partiell vernetzte Kautschuke einer Glasübergangstemperatur ≤ 20 °C eines mittleren Teilchendurchmessers ($d_{50}$) von 0,1-5 µm und einem Gelgehalt (in Toluol) > 50 Gew.-% im Gewichtsverhältnis von Kautschuk zu pfropfpolymerisierten Monomeren von 80 : 20 bis 5 : 95 sowie gegebenenfalls

d) 0-12 Gew.-Teile pro 100 Gew.-Teile a + b + c einer halogenhaltigen organischen Flammschutzverbindung und

e) 0-5 Gew.-Teile pro 100 Gew.-Teile a + b + c Zinndioxid, Calciumphosphit, Calciumhypophosphit, Zinkborat, Aluminiumoxid, Kryolith, Wismutoxid oder Bariumcarbonat.

**Claim**

Self-extinguishing, thermoplastic moulding compositions of

a) 20-80 % by weight (based on a + b + c) of a copolycarbonate of a dihydric phenol and a dihydric halogenated phenol, the copolycarbonate containing 3-20 % by weight of cocondensed halogen,

b) 10-70 % by weight (based on a + b + c) of a thermoplastic copolymer of
1. 10-90 % by weight (based on copolymer) of a nucleus-alkylated styrene of the formula I

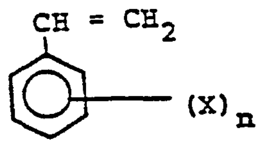

(I)

wherein
X denotes methyl, ethyl, n-propyl or isopropyl and
n denotes an integer from 1 to 5,
2. 80-0 % by weight of styrene and/or α-methylstyrene and
3. 10-30 % by weight of acrylonitrile

c) 10-70 % by weight (based on a + b + c) of a graft polymer of styrene, α-methylstyrene, nucleus-substituted styrene of the formula I or mixtures thereof, on the one hand, and acrylonitrile, methyl methacrylate or mixtures thereof, on the other hand, on particulate, at least partially cross-linked rubbers having a glass transition temperature of ≤ 20 °C, an average particle diameter ($d_{50}$) of 0.1-5 µm and a gel

content (in toluene) of > 50 % by weight, in a weight ratio of rubber to graft-polymerised monomers of 80 : 20 to 5 : 95, and, optionally,

d) 0-12 parts by weight, per 100 parts by weight of a + b + c, of a halogen-containing organic flameproofing compound and

e) 0-5 parts by weight, per 100 parts by weight of a + b + c, of tin dioxide, calcium phosphite, calcium hypophosphite, zinc borate, aluminium oxide, crylolite, bismuth oxide or barium carbonate.

**Revendication**

Matières à mouler thermoplastiques auto-extinguibles consistant en :

a) 20 à 80 % en poids (par raport à a + b + c) d'un copolycarbonate d'un phénol divalent et d'un phénol halogéné divalent, ce copolycarbonate contenant 3 à 20 % en poids d'halogène condensé,

b) 10 à 70 % en poids (par rapport à a + b + c) d'un copolymère thermoplastique de :
1. 10 à 90 % en poids (par raport au copolymère) d'un styrène alkylé dans le noyau répondant à la formule I

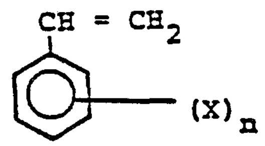

(I)

dans laquelle
X = méthyle, éthyle, n-propyle ou isopropyle et
n = nombre entier de 1 à 5,
2. 80 à 0 % en poids de styrène et/ou d'α-méthylstyrène et
3. 10 à 30 % en poids d'acrylonitrile

c) 10 à 70 % en poids (par rapport à a + b + c) d'un polymère greffé du styrène, de l'α-méthylstyrène, d'un styrène substitué dans le noyau répondant à la formule I ou de mélanges de ces monomères d'une part et d'acrylonitrile, de méthacrylate de méthyle ou de mélanges de ces monomères d'autre part, sur des caoutchoucs en particules, au moins partiellement réticulés, ayant une température de transition vitreuse ≤ 20 °C, un diamètre de particules moyen $d_{50}$ de 0,1 à 5 μm et une teneur en gel (dans le toluène) > 50 % en poids, à des proportions relatives en poids de 80 : 20 à 5 : 95 entre le caoutchouc et les monomères polymérisés par greffage, et le cas échéant

d) 0 à 12 parties en poids, pour 100 parties en poids de a + b + c, d'un composé organique halogéné ignifugeant et

e) 0 à 5 parties en poids, pour 100 parties en poids de a + b + c, de dioxyde d'étain, de phosphite de calcium, d'hypophosphite de calcium, de borate de zinc, d'alumine, de cryolithe, d'oxyde de bismuth ou de carbonate de baryum.